# EUROPEAN PATENT APPLICATION

(11) **EP 2 518 234 A2**
(43) Date of publication of application: **31.10.2012**
(21) Application number: 12165551.8
(22) Date of filing: 25.04.2012
(51) Int. Cl.: E04D 11/00, A01G 1/00

(54) **Modular planting system for roof applications**

(30) Priority: 25.04.2011 US 201113093458
(71) Applicant: Hortech Inc., Nunica, Michigan 49448 (US)
(72) Inventor: MacKenzie, David, Nunica, MI 49448 (US)
(74) Representative: Hicks, Paul Edward

(57) **Abstract**

A green roof planter module includes a planter including a bottom wall, a plurality of sidewalls each including an upper portion and a lower portion, wherein the bottom wall and the plurality of sidewalls cooperate with one another to form an interior space, and a biodegradable collar member extending upwardly from at least a select one of the biodegradable sidewalls, wherein at least a portion of the collar member is in-molded within the upper portion of at least one of the sidewalls, and wherein the collar member is adapted to retain a plant matter that extends above the plurality of sidewalls.

## Description

### BACKGROUND OF THE INVENTION

The present invention relates to a modular planting system for roof applications, and in particular to a modular planting system that includes a plurality of planter modules each including a planter and a biodegradable collar member extending upwardly from an uppermost portion of the planter, thereby allowing plant matter to extend above the upper edge of the associated planter and the biodegradable collar to degrade once the planter module is placed adjacent to a plurality of other planter modules, thereby creating a green-roof system.

Green-roof systems are used in a wide variety of applications, including commercial and residential buildings. The positive thermal properties of the systems result in significant cost savings with respect to cooling of the associated buildings and structures. Further, the systems dramatically reduce the amount of water runoff caused by rainfall, which is particularly critical in urban areas. The systems typically include a soil or aggregate matter supporting plants therein, and barrier layers for protecting the underlying roof and for providing the necessary water barriers and drainage for the associated plants. These methods may include the application of seed-including soils to the selected roof area. However, this method typically requires a significant amount of time until the plants provide adequate coverage. Other methods that have been employed include the use of modular systems, thereby reducing the grow-time required in order to provide adequate coverage by allowing plants to at least partially mature prior to being utilized within a green roof system. However, these systems employ normal planter boxes wherein the plant matter rests below an uppermost edge of the associated planter or container. Such methods, while a vast improvement over previous methods, typically result in several months to years of grow time while the individual sections grow and subsequently fuse together to provide adequate roof coverage.

A planted roof system is desired that provides adequate roof coverage quickly and economically, while simultaneously being easy to install at a relative low cost.

### SUMMARY OF THE INVENTION

One aspect of the present invention is to provide a green roof planter module comprising a planter including a bottom wall, a plurality of sidewalls each including an upper portion and a lower portion, wherein the bottom wall and the plurality of sidewalls cooperate with one another to form an interior space, and a biodegradable member extending upwardly from at least a select one of the plurality of sidewalls, wherein at least a portion of the collar member is in-molded within the upper portion of at least one of the sidewalls, and wherein the collar member is adapted to retain a plant matter that extends above the plurality of sidewalls.

Another aspect of the present invention is to provide a method for installing a modular green roof system that comprises providing a biodegradable collar member having an upper portion and a lower portion, molding a planter that includes a bottom wall and a plurality of sidewalls each having an upper portion and an uppermost edge, wherein the bottom wall and the plurality of sidewalls cooperate to form an interior space, and in-molding the lower portion of the biodegradable collar member within an upper portion of at least one of the sidewalls of the planter as the planter is molded such that the biodegradable collar extends upwardly from at least a select one of the plurality of sidewalls. The method further includes placing and growing a plant matter within the interior space of the planter such that at least a portion of the plant matter extends upward from the uppermost edge of at least one of the plurality of sidewalls, and positioning the planter proximate to at least one other planter.

The present inventive green roof system provides coverage of an entire roof area quickly and economically by allowing the associated modules to be grown off-sight in a manner that allows the plant matter to extend upwardly from an associated planter and plant matter within adjacent modules to abut immediately upon installation. Further, the roof system is easy to install at a relatively low cost. Moreover, the system provides improved water communication and drainage between adjacent modules, allows easy maintenance of the overall system, can be installed easily and quickly by even unskilled personnel, is capable of a long-operating life, and is particularly well adapted for the proposed use.

These and other advantages of the invention will be further understood and appreciated by those skilled in the art by reference to the following written specification, claims and appended drawings.

### BRIEF DESCRIPTION OF THE DRAWINGS

Preferred embodiments of the present invention will now be described by way of example only with reference to the accompanying drawings, in which:
Fig. 1 is a perspective view of a building employing a green roof system embodying the present invention;
Fig. 2 is a perspective view of a green roof planter module that includes a biodegradable collar member in-molded within an associated planter;
Fig. 3 is an exploded perspective view of the planter module;
Fig. 4 is an enlarged perspective view of the planter module including a cut-away portion of the collar member in-molded the planter; and
Fig. 5 is a partial cross-sectional end view of the planter module.

### DETAILED DESCRIPTION OF THE PREFERRED EMBODIMENTS

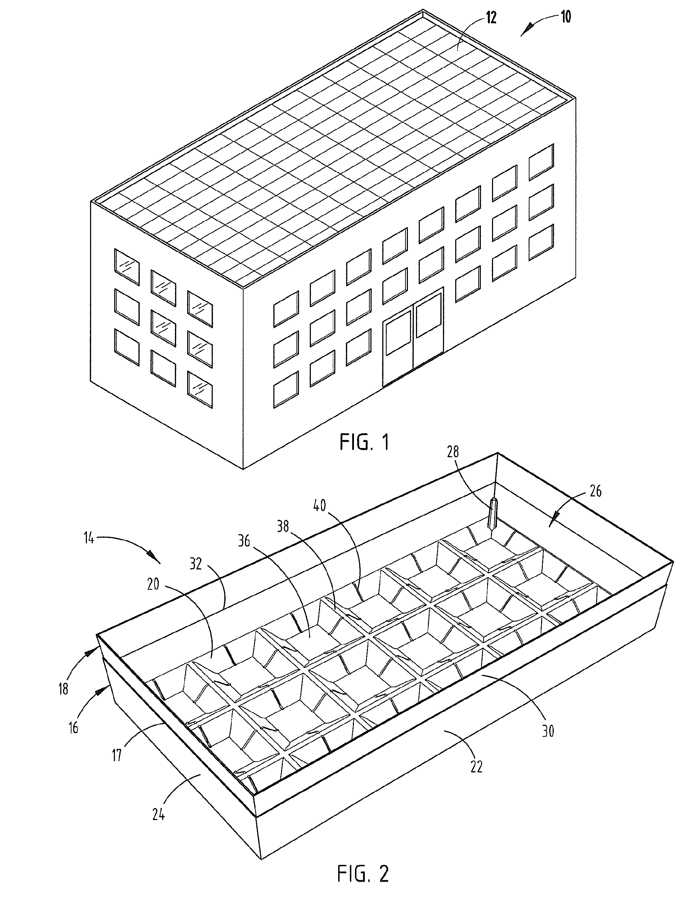

For purposes of description herein, the terms "upper," "lower," "right," "left," "rear," "front," "vertical," "horizontal," and derivatives thereof shall relate to the invention as oriented in Fig. 2. However, it is to be understood that the invention may assume various alternative orientations and step sequences, except where expressly specified to the contrary. It is also to be understood that the specific devices and processes illustrated in the attached drawings, and described in the following specification are exemplary embodiments of the inventive concepts defined in the appended claims. Hence, specific dimensions and other physical characteristics relating to the embodiments disclosed herein are not to be considered as limiting, unless the claims expressly state otherwise.

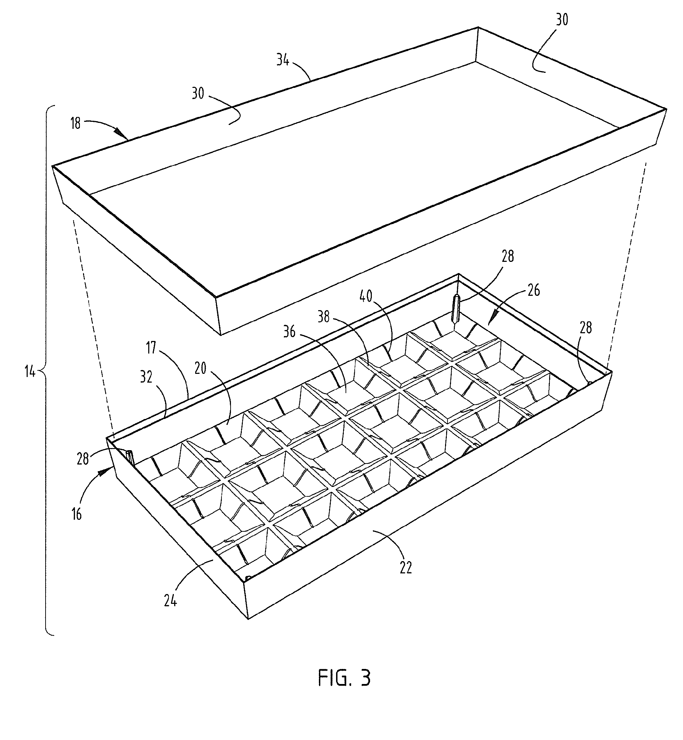

The reference numeral 10 (Fig. 1) generally designates a green roof system embodying the present invention and employed on a building roof 12 and comprising a plurality of individual green roof planter modules 14. In the illustrated example, each of the planter modules 14 (Figs. 2 and 3) comprises a planter 16 and a biodegradable collar 18 in-molded within the planter 16 such that the collar 18 extends upwardly from an uppermost edge 17 of the planter 16, thereby allowing the retention of plant matter that extends above the uppermost edge 17 of the planter 16.

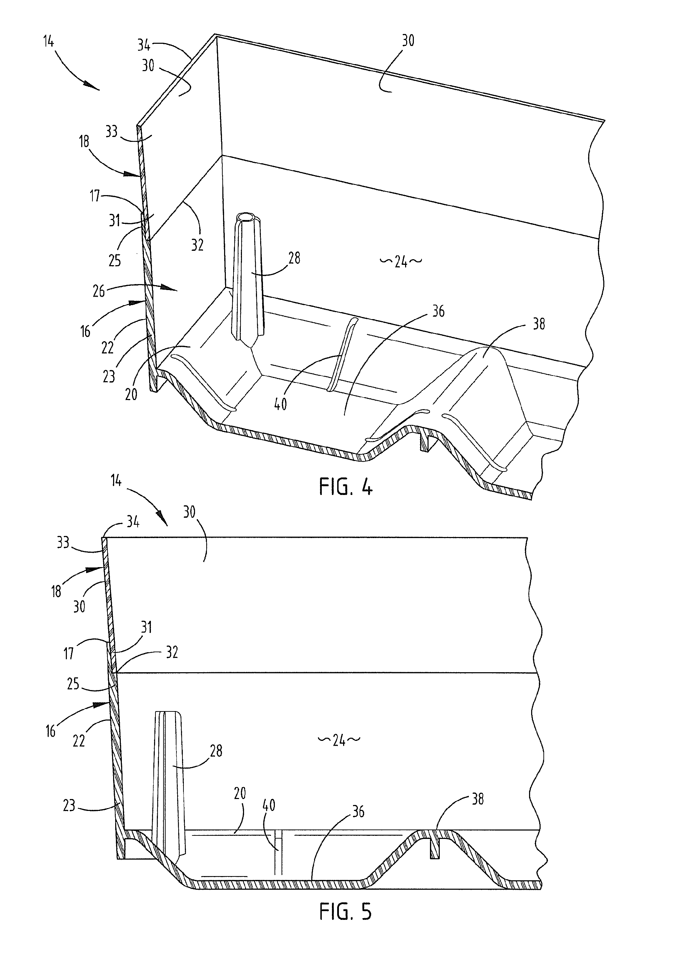

Each planter 16 includes a bottom wall 20, and a plurality of walls that include sidewalls 22 and end walls 24 (all generally referred to herein as sidewalls) each including a bottom portion 23 and an upper portion 25 that cooperate with the bottom wall 20 to form an interior space 26. Each of the sidewalls and end walls include an uppermost or top edge 17. As best illustrated in Fig. 4, the planter 16 includes a plurality of spacing tabs 28 that extend upwardly from the bottom wall 20 for spacing stacked planters 16 from one another as described herein. The planter 16 is preferably integrally molded by press forming, and the like, and is constructed of a material such as plastic. In the illustrated example, the planter 16 is providing a rectangularly-shaped overall plan form, however, other configurations may also be utilized. Further, it is noted that the tabs 28 are configured to abut the bottom surface of the bottom wall 20 of another planter 16 when multiple planters are placed in a stacked relationship.

The collar member 18 includes a plurality of walls 30 each having a bottom portion 31 with a bottom edge 32 and top portion 33 with a top edge 34. In the illustrated example, the collar member 18 comprises two pieces that extend in a rectangular manner about the planter 16, and is constructed of a biodegradable material such as fiber products, paper products, wood products, biodegradable plastics, and the like. Specifically, the collar member 18 extends about the interior space 26 of the associated planter 16 such that the bottom portion 31 of each of the walls 30 is in-molded within the upper portion 25 of each of the sidewalls and end walls 22, 24 of the planter 16, thereby securing the biodegradable collar member 18 within the interior space 26 of the planter 16, and such that the walls 30 of the collar member 18 extend upwardly from the top edge 17 of the sidewalls and end walls 22, 24 of the planter 16. The collar member 18 is in-molded within the planter 16 to form a single, integral unit which may be formed by placing the collar member 18 within an associated mold prior to forming the planter 16 via a press-forming process, blow molding process or other forming process known in the art.

In operation, a plant matter that comprises grown plants, plant seedlings, plant seeds and the like, and soil and/or aggregate is inserted into the interior space 26 of the planter 16. Subsequently, plants are grown within the interior space 26 until such plant matter extends upwardly above the top edge 17 of the sidewalls and end walls 22, 24 of the planter 16. The planter module 14 is then placed in rows or a grid work-like pattern upon a roof 12 (Fig. 1), where the biodegradable collar member 18 quickly degrades such that the plant matter within the interior space 26 of the planter 16 abuts similar plant matter in adjacent planter modules 14, thereby providing a connected roof system that will quickly provide an interconnected and aesthetically-pleasing planted surface. It is also noted that the walls 30 of the collar member 18 angles outwardly from the sidewalls and end walls 22, 24 of the planter 16, thereby promoting a tight abutment of the plant matter extending above the top edge 17 of the sidewalls and end walls 22, 24 between adjacent planter modules 14.

The proper communication of water between adjacent planters 16 is provided by various elements within the planter 16. As best illustrated in Fig. 2, the bottom wall 20 of the planter 16 comprises a grid work-like pattern of recesses 36 segmented by raised portions 38. A plurality of drainage apertures 40 extend through the recesses 36 and the raised portions 38. It is noted that at least a portion of each of the drainage apertures 40 extend through a lowermost portion of the bottom wall 20, thereby eliminating standing water within the planter 16. Each of the sidewalls and end walls 22, 24 of the planter 16 also include arcuately-shaped recesses or apertures 42 extending therethrough that align with similar apertures of adjacent planters when positioned within the overall gridwork. As illustrated, each of the apertures extends downwardly from the top edge 17 of the sidewalls and end walls 22, 24, a distance that is greater than half of the distance between the top edge 17 and a point at which the bottom wall 20 intersects the sidewalls and/or end wall 22, 24, thereby providing adequate water communication between adjacent planters 16 and further allowing for the migration of plant matter therebetween.

The present inventive green roof system provides coverage of an entire roof area quickly and economically by allowing the associated modules to be grown off-sight in a manner that allows the plant matter to extend upwardly from an associated planter and plant matter within adjacent modules to abut immediately upon installation. Further, the roof system is easy to install at a relatively low cost. Moreover, the system provides improved water communication and drainage between adjacent modules, allows easy maintenance of the overall system, can be installed easily and quickly by even unskilled personnel, is capable of a long-operating life, and is particularly well adapted for the proposed use.

In the foregoing description, it will be readily appreciated by those skilled in the art, that modifications may be made to the invention without departing from the concepts as disclosed herein, such modifications are to be considered as included in the following claims, unless these claims by their language expressly state otherwise.

## Claims

1. A green roof planter module, comprising:
a planter including a bottom wall, a plurality of side walls each including an upper portion and a lower portion, wherein the bottom wall and the plurality of sidewalls cooperate with one another to form an interior space; and
a biodegradable collar member extending upwardly from at least a select one of the plurality of side-walls, wherein at least a portion of the collar member is in-molded within the upper portion of at least one of the side walls, and wherein the collar member is adapted to retain a plant matter that extends above the plurality of sidewalls.

2. The green roof planter module as claimed in claim 1, wherein the collar member completely surrounds the interior space.

3. The green roof planter module as claimed in claim 1 or claim 2, wherein the collar member is in-molded within each and every one of the plurality of side walls.

4. The green roof planter module as claimed in any one of the preceding claims, wherein the collar angles outwardly from the plurality of sidewalls.

5. The green roof planter module as claimed in any one of the preceding claims, wherein the biodegradable collar member comprises at least a select one of a paper material, a fiber material and a biodegradable plastic.

6. The green roof planter module as claimed in any one of the preceding claims, wherein the planter includes at least one spacing tab extending upwardly from the bottom wall and adapted to abut a bottom surface of a bottom wall of a second planter when in a stacked position with the planter.

7. The green roof planter module as claimed in any one of the preceding claims, wherein the collar member is at least partially located within the interior space of the planter.

8. A method for installing a modular green roof system, comprising;
providing a biodegradable collar member having an upper portion and a lower portion;
molding a planter that includes a bottom wall and a plurality of side walls each having an upper portion and an uppermost edge, wherein the bottom wall and the plurality of side walls cooperate to form an interior space;
in-molding the lower portion of the biodegradable collar member within an upper portion of at least one of the side walls of the planter as the planter is molded such that the biodegradable collar extends upwardly from at least a select one of the plurality of sidewalls;
placing and growing a plant matter within the interior space of the planter such that at least a portion of the plant matter extends upwardly from the uppermost edge of at least one of the plurality of side walls; and
positioning the planter proximate to at least one other planter.

9. The method as claimed in claim 8, wherein the step of in-molding the collar member includes in-molding the collar member to completely surround the interior space.

10. The method as claimed in claim 8 or claim 9, wherein the step of in-molding the collar member includes in-molding the collar member within each and every one of the plurality of side walls.

11. The method as claimed in any one of claims 8 to 10, wherein the step of in-molding the collar member includes in-molding the collar such that the collar angles outwardly from the plurality of sidewalls.

12. The method as claimed in any one of claims 8 to 11, wherein the step of providing the biodegradable collar member includes providing the collar as comprising at least a select one of a paper material, a fiber material and a biodegradable plastic.

13. The method as claimed in any one of claims 8 to 12, wherein the step of molding the planter includes molding the planter such that the bottom wall of the planter includes at least one drainage aperture located therein, and wherein at least a portion of the at least one drainage aperture is located with a lower most portion of the bottom wall.

14. The method as claimed in any one of claims 8 to 13, wherein the step of molding the planter includes molding the planter to include at least one spacing tab extending upwardly from the bottom wall and adapted to abut a bottom surface of a bottom wall of a second planter when in a stacked position with the planter.

15. The method as claimed in any one of claims 8 to 14, wherein the step of in-molding the collar includes in-molding the collar member such that the collar member is at least partially located within the interior space of the planter.
